# EUROPEAN PATENT APPLICATION

(11) **EP 2 937 756 A1**
(43) Date of publication of application: **28.10.2015**
(21) Application number: 14165473.1
(22) Date of filing: 22.04.2014
(51) Int. Cl.: G05D 1/00, B64F 5/00, G01M 5/00

(54) **Method for inspecting an airborne vehicle**

(71) Applicant: Airbus Operations GmbH, 21129 Hamburg (DE); Airbus (S.A.S.), 31707 Blagnac (FR)
(72) Inventor: Gonnsen, Johannes, 22767 Hamburg (DE); Thieme, Thomas, 31820 Pibrac (FR)
(74) Representative: Isarpatent

(57) **Abstract**

The present invention pertains to a method for inspecting an airborne vehicle, the method comprising equipping an unmanned mobile vehicle, UMV, with at least one sensor, manoeuvring the UMV through an interior of the airborne vehicle, recording a plurality of scan parameters in the interior of the airborne vehicle by using the at least one sensor, associating the plurality of scan parameters with spatial positions within the airborne vehicle, and generating a parameter map of the interior of the airborne vehicle according to the associated spatial positions.

## Description

### TECHNICAL FIELD

The present invention relates to a method for inspecting an airborne vehicle.

### TECHNICAL BACKGROUND

Unmanned aerial vehicles (UAVs) are remotely controlled or autonomously manoeuvring vehicle that do not require a pilot to be on board of the vehicle. UAVs may be controlled remotely by a flight controller at a ground control station or may fly autonomously based on predefined flight routes or dynamic in-flight navigation algorithms. A current use for UAVs involves inter alia military missions such as targeted attack, reconnaissance and surveillance.

Document DE 10 2011017 564 A1 discloses a method for automated inspection of surfaces using rotocopters. Document US 2010/0268409 A1 discloses a method for inspecting structures that use a plurality of unmanned mobile vehicles. Document WO 2013/141923 A2 discloses scanning apparatuses mounted on unmanned aerial vehicles for surveying purposes. Document US 8,590,828 B2 discloses an aerial vehicle on which sensors, tools and instruments may be mounted.

When delivering newly produced aircraft any changes made to the standard manufacturing and homologation papers are diligently recorded and documented. During the lifetime of an aircraft parts of the aircraft such as the passenger cabin will be completely reconditioned. However, while the manufacturing and homologation papers have been brought into shape after sales, further changes and adjustments may have been arranged. For the reconditioning of the aircraft parts those papers need to be updated accordingly.

Conventionally, the effort for updating those documents requires personnel to inspect the aircraft in its current state and document the respective changes and adjustments manually, leading to a fairly cost-intensive and cumbersome procedure.

### SUMMARY OF THE DISCLOSURE

One object of the invention is thus to provide solutions for monitoring current states and conditions of parts and structures of airborne vehicles that are easy to implement and do not require on-site presence of inspecting personnel.

This object is achieved by a method for inspecting an airborne vehicle having the features of claim 1.

A method for inspecting an airborne vehicle comprises equipping an unmanned mobile vehicle, UMV, with at least one sensor, manoeuvring the UMV through an interior of the airborne vehicle, recording a plurality of scan parameters in the interior of the airborne vehicle by using the at least one sensor, associating the plurality of scan parameters with spatial positions within the airborne vehicle, and generating a parameter map of the interior of the airborne vehicle according to the associated spatial positions.

The idea on which the present invention is based is to use unmanned mobile vehicles (UMVs), in particular unmanned aerial vehicles (UAVs), that are able to autonomously survey the interior and/or exterior of the airborne vehicle to be inspected and to autonomously gather state parameters using vehicle mounter sensors such as cameras, laser scanners, ultrasonic sensors, magnetic sensors, infrared sensors, barcode scanners, chemical sensors, gas sensors, metal detectors, biosensors and similar physical parameter detection devices. Any data gathered by the UMVs can then be correlated with reference positions within or on the airborne vehicle to generate a map of physical parameters of the airborne vehicle. The map of physical parameters may be used to remotely assess the current manufacturing and operational state of the airborne vehicle.

Particularly advantageous may be the reduction of costs associated with updating manufacturing and homologation papers. Moreover, any faults, inconsistencies and defects may readily be detected with the autonomous surveying procedure employed by the UMVs.

According to an embodiment of the method, the UMV may be an unmanned aerial vehicle, UAV, such as a quadrocopter.

According to a further embodiment of the method, the manoeuvring of the UAV may further comprise autonomously determining reference points within the interior of the airborne vehicle by the UAV, calibrating a pre-stored navigation route of the interior of the airborne vehicle according to the determined reference points, and autonomously navigating the UAV through the interior of the airborne vehicle according to the calibrated navigation route. This enables the UAV to autonomously navigate through the airborne vehicle, saving human resources for controlling the UAV. Particularly, since certain reference points within the interior of the airborne vehicle are always fixed relative to the vehicle itself, such as for example the control rod joints of the vehicle's doors in the fuselage of the airborne vehicle, the UAV may use a pre-stored navigation route within the airborne vehicle.

According to a further embodiment of the method, the at least one sensor may comprise one or more of a camera, a laser scanner, an ultrasonic sensor, a magnetic sensor, an infrared sensor, a barcode scanner, a chemical sensor, a gas sensor, a metal detector and a biosensors. This enables a broad range of safety/security checks, maintenance reports and quality controls to be performed at the same time using the UMV. It may advantageously be possible to conduct wear/fatigue checks of cabin components and their respective material, determination of manufacturing stages of the vehicle's cabin and/or tracing of hazardous or illegal objects such as weapons, drugs, parasites or similar.

According to a further embodiment of the method, recording a plurality of scan parameters may comprise optically recording optical machine-readable representation of data relating to devices or structures within the interior of the airborne vehicle. The encoded information may in one further embodiment comprise one of more of linear barcodes, matrix barcodes, QR codes, pin numbers, vehicle identification numbers and color codes. If all relevant devices and components are pre-tagged with structured label information, all mechanical and electrical systems may be conveniently scanned remotely.

According to a further embodiment of the method, recording a plurality of scan parameters may comprise wear or fatigue parameters of corresponding devices and structures within the interior of the airborne vehicle. In this embodiment the recording may comprise recording sound or ultrasound reflection of the devices and structures within the interior of the airborne vehicle.

According to a further embodiment of the method, the method may further comprise remotely transmitting the generated parameter map to a service and maintenance facility. In a further embodiment, the remotely transmitted parameter map may be used to update manufacturing and homologation papers of the airborne vehicle. This enables a maintenance and service facility crew to optimize pre-planning of any maintenance and service operations, thus saving time and resources.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.

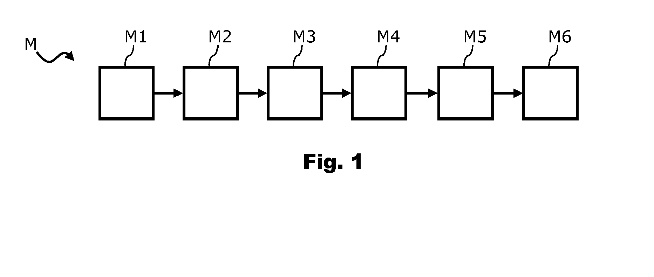

Fig. 1 schematically illustrates a method for inspecting an airborne vehicle according to an embodiment.

### DETAILED DESCRIPTION OF EMBODIMENTS

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Unmanned aerial vehicles (UAV) within the meaning of the present disclosure may comprise any mobile flying vehicle that may be controlled without a human pilot aboard. UAVs may have their flight controlled either autonomously by onboard computers or remotely by a pilot in a ground-based control station or in another vehicle. A UAV may for example comprise a quadcopter, a quadrotor helicopter, a quadrocopter, or a quad rotor. Generally, a quadcopter is an aerial rotorcraft that is propelled by four rotors. In certain embodiments, control of UAV motion may be achieved by altering the pitch or rotation rate of one or more rotors. Other configurations are also possible for suitable UAVs, including multi-rotor designs such as, for example, dual rotor, trirotor, hexarotor, and octorotor, or single-rotor designs such as helicopters. UAVs within the meaning of the present disclosure may also comprise fixed-wing UAVs. UAVs may have vertical take-off and landing (VTOL) capabilities. In some embodiments, the rotors of UAVs may be manufactured from soft, energy absorbing and impact-resistant materials. In some embodiments, the UAVs have frames that enclose the rotors. Enclosing the rotors can have advantages, such as reducing the risk of damaging either the UAV or its surroundings. The propulsion system can also be ducted. For certain embodiments, hybrid UAVs, fixed wing architectures combined with VTOL capability, allow for greater aerodynamic efficiency, and thus the UAV is able to fly further for the same battery load. In certain embodiments, the UAV can be a compound rotorcraft, for example, having wings that provide some or all of the lift in forward flight. In some embodiments, the UAV may be a tiltrotor aircraft.

Unmanned mobile vehicles (UMVs) within the present disclosure may comprise any vehicle which operates and moves while in contact with the ground, without a human pilot being onboard. UMVs may include rovers, ground based drones and other mobile robots.

As exemplarily illustrated in Fig. 1, a method M is established for inspecting an airborne vehicle such as a passenger or cargo aircraft. The method M comprises at M1 equipping an UMV, for example an UAV such as a quadrocopter, with at least one sensor, for example a camera, a laser scanner, an ultrasonic sensor, a magnetic sensor, an infrared sensor, a barcode scanner, a chemical sensor, a gas sensor, a metal detector and a biosensor. It may also be possible to install more than one sensor and/or more than one sensor type on the UMV. Such a UMV may for example be provided by an aircraft maintenance and service provider that pre-configures the UMV accordingly for an airline operator to use in its airborne vehicles. The UMV may for example be equipped at a different site than the current location of the airborne vehicle, and shipped to the airline operator.

At M2, the UMV is manoeuvred through an interior of the airborne vehicle, such as the passenger cabin, a cargo compartment or cargo hold. While manoeuvring, the UMV may be configured to record a plurality of scan parameters in the interior of the airborne vehicle by using the at least one sensor, and to store the respectively detected scan parameters in an internal parameter storage. It may also be possible to transmit the plurality of scan parameters on-the-fly to a remote location such as an operations centre or a controlling facility of the airline operator.

The manoeuvring may in particular be conducted by autonomously determining reference points within the interior of the airborne vehicle by the UAV, for example control rod joints of doors in the fuselage of an aircraft. Those reference points may be used for internal calibration of a pre-stored navigation route of the interior of the airborne vehicle. The pre-stored navigation route of the UAV may depend on the type of airborne vehicle and previously known vehicle layouts of the passenger cabin, cargo hold or cargo department. The UAV may then use the calibrated navigation route to autonomously navigate through the interior of the airborne vehicle.

Additionally or alternatively, the UAV may utilize sensor data generated at its current position to determine any dynamically changing obstacle within its intended path, such as for example technicians or cabin crew members, cabin monuments not expected to be at the respective position within the aircraft or movable barriers such as cabin trolleys. The UAV may take the sensor data into account in dynamically changing or altering its navigation path to avoid colliding with obstacles.

The recorded plurality of scan parameters are then associated with spatial positions within the airborne vehicle at M4, so that at M5 a parameter map of the interior of the airborne vehicle may be generated according to the associated spatial positions. The type and kind of scan parameters recorded may depend on the used sensor type: For example, the UAV may optically record optical machine-readable representation of data relating to devices or structures within the interior of the airborne vehicle. Such encoded information may for example be linear barcodes, matrix barcodes, QR codes, pin numbers, vehicle identification numbers and color codes. The codes may be encoded on labels attached to the respective devices and structures within the interior of the airborne vehicle.

It may also be possible to record a plurality of scan parameters to determine wear or fatigue parameters of corresponding devices and structures within the interior of the airborne vehicle, for example by recording sound or ultrasound reflection of the devices and structures within the interior of the airborne vehicle. According to the wear or fatigue parameters it may then be determined whether cable trees, seat track rails, floor tiles or any other similar components need to be repaired or replaced. In order to determine at a competent facility whether any such repair or replacement needs to be performed, the method M may further comprise remotely transmitting the generated parameter map to a service and maintenance facility at M6. The remotely transmitted parameter map may then for example be used to update manufacturing and homologation papers of the airborne vehicle.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

List of reference numerals and signs
- M: Method
- M1: Method step
- M2: Method step
- M3: Method step
- M4: Method step
- M5: Method step
- M6: Method step

## Claims

1. Method (M) for inspecting an airborne vehicle, comprising:
equipping (M1) an unmanned mobile vehicle, UMV, with at least one sensor;
manoeuvring (M2) the UMV through an interior of the airborne vehicle;
recording (M3) a plurality of scan parameters in the interior of the airborne vehicle by using the at least one sensor;
associating (M4) the plurality of scan parameters with spatial positions within the airborne vehicle; and
generating (M5) a parameter map of the interior of the airborne vehicle according to the associated spatial positions.

2. Method (M) according to claim 1, wherein the UMV is an unmanned aerial vehicle, UAV.

3. Method (M) according to claim 2, wherein the manoeuvring (M2) of the UAV comprises:
autonomously determining reference points within the interior of the airborne vehicle by the UAV;
calibrating a pre-stored navigation route of the interior of the airborne vehicle according to the determined reference points; and
autonomously navigating the UAV through the interior of the airborne vehicle according to the calibrated navigation route.

4. Method (M) according to one of the claims 2 and 3, wherein the UAV comprises a quadrocopter.

5. Method (M) according to one of the claims 1 to 4, wherein the at least one sensor comprises one or more of a camera, a laser scanner, an ultrasonic sensor, a magnetic sensor, an infrared sensor, a barcode scanner, a chemical sensor, a gas sensor, a metal detector and a biosensors.

6. Method (M) according to one of the claims 1 to 5, wherein recording (M3) a plurality of scan parameters comprises optically recording optical machine-readable representation of data relating to devices or structures within the interior of the airborne vehicle.

7. Method (M) according to claim 6, wherein the encoded information comprises one of more of linear barcodes, matrix barcodes, QR codes, pin numbers, vehicle identification numbers and color codes.

8. Method (M) according to one of the claims 1 to 7, wherein recording (M3) a plurality of scan parameters comprises wear or fatigue parameters of corresponding devices and structures within the interior of the airborne vehicle.

9. Method (M) according to claim 8, wherein the recording (M3) comprises recording sound or ultrasound reflection of the devices and structures within the interior of the airborne vehicle.

10. Method (M) according to one of the claims 1 to 9, further comprising:
remotely transmitting (M6) the generated parameter map to a service and
maintenance facility.

11. Method (M) according to claim 10, wherein the remotely transmitted parameter map is used to update manufacturing and homologation papers of the airborne vehicle.
